# EUROPÄISCHE PATENTSCHRIFT

(11) **EP 4 053 973 B1**
(45) Veröffentlichungstag und Bekanntmachung des Hinweises auf die Patenterteilung: **22.05.2024**
(21) Anmeldenummer: 22158568.0
(22) Anmeldetag: 24.02.2022
(51) Int. Cl.: H01M 10/6551

(54) **ENERGIESPEICHERMODUL**
ENERGY STORAGE MODULE
MODULE ACCUMULATEUR D'ÉNERGIE

(30) Priorität: 04.03.2021 DE 102021202115
(43) Veröffentlichungstag der Anmeldung: 07.09.2022
(73) Patentinhaber: Siemens Mobility GmbH, 81739 München (DE)
(72) Erfinder: Buchler Klätschke, Lars, 90419 Nürnberg (DE); Krickau, Andreas, 91088 Bubenreuth (DE)
(74) Vertreter: Siemens Patent Attorneys

(56) Entgegenhaltungen:
- DE-A1-102019 108 386
- JP-A- 2015 106 527
- US-A1- 2019 115 638
- US-A1- 2020 006 825

## Beschreibung

Die Erfindung betrifft ein Energiespeichermodul mit einem quaderförmigen Gehäuse sowie zumindest zwei darin angeordneten Speicherzellen.

Eine beispielhafte Energiespeichereinrichtung ist in der US-Schrift US 2018/301773 A1 beschrieben.

Dokument DE 10 2019 108386 A1 offenbart eine Halteeinrichtung einer Batterie eines Kraftfahrzeugs, wobei die Halteeinrichtung für jede einer Vielzahl prismatischer Zellen ein Aufnahmefach aufweist, dessen Begrenzungswände jeweils entlang der Hochrichtung einen die Stabilität der Halteeinrichtung erhöhende wellenförmigen Querschnitt aufweisen. Ferner offenbart Dokument US 2020/006825 A1 ein Batteriemodul für ein Fahrzeug, welches durch ein Kühlkanalmodul, Seitenabdeckungen und eine Deckplatte gebildet wird, wobei die Deckplatte einen wellenförmigen Querschnitt aufweist.

Der Erfindung liegt die Aufgabe zugrunde, ein Energiespeichermodul anzugeben, welches eine zuverlässige Wärmeabfuhr an die Umgebung des Gehäuses gewährleistet und ein Überhitzen der Energiespeichermoduls in einfacher Weise vermeiden kann. Diese Aufgabe wird durch ein Energiespeichermodul sowie ein Fahrzeug mit zumindest einem solchen Energiespeichermodul gemäß den Merkmalen der unabhängigen Patentansprüche gelöst. Weiterbildungen sind in jeweiligen abhängigen Patentansprüchen angegeben.

Danach ist erfindungsgemäß vorgesehen, dass ein Energiespeichermodul zumindest ein quaderförmiges Gehäuse mit vier Seitenwänden und zwei Stirnwänden aufweist, in welchem zumindest zwei Speicherzellen angeordnet sind. Kennzeichnend sind zumindest zwei der Seitenwände des Gehäuses aus einem thermisch leitfähigen Material hergestellt und weisen jeweils zumindest einen Seitenwandbereich mit einem wellenförmigen Querschnitt sowohl der Außenseite als auch der Innenseite der Seitenwand auf, wobei die zumindest zwei Seitenwände aus einem oder mehreren Metallblechen gefertigt sind, wobei die Innenseiten zumindest der Seitenwandbereiche jeweils mit einem elektrisch isolierenden, jedoch thermisch leitfähigen Material verkleidet oder beschichtet sind, welches auf der Innenseite spaltfrei anliegt, wobei das Material auf seiner dem Seitenwandbereich abgewandten Seite mit einem elektrisch leitfähigen Material (310) verkleidet oder beschichtet ist, welches auf dem elektrisch isolierenden, thermisch leitfähigen Material spaltfrei anliegt, wobei der Seitenwandbereich), das elektrisch isolierende, thermisch leitfähige Material und das elektrisch leitfähige Material eine Sandwichstruktur (320) ausbilden.

Ein Vorteil des erfindungsgemäßen Energiespeichermoduls ist darin zu sehen, dass durch den wellenförmigen Querschnitt der Seitenwandbereiche eine Oberflächenvergrößerung des Gehäuses erzielt wird, welche eine Wärmeabfuhr nach außen bzw. an die Umgebungsatmosphäre des Gehäuses ermöglichen, ohne besondere Kühleinrichtungen wie beispielsweise Kühlfinnen oder eine gesonderte mit dem Gehäuse thermisch verbundene Kühlplatte vorsehen zu müssen.

Vorzugsweise weist das quaderförmige Gehäuse an drei oder mehr Quaderteilflächen bzw. Seitenwänden jeweils zumindest einen Seitenwandbereich mit einem wellenförmigen Querschnitt auf.

Gemäß einer Weiterbildung liegt jeder Erhöhung auf der Außenseite des Seitenwandbereichs eine korrespondierende Vertiefung auf der Innenseite des Seitenwandbereichs gegenüber, und liegt jeder Vertiefung auf der Außenseite des Seitenwandbereichs eine korrespondierende Erhöhung auf der Innenseite des Seitenwandbereichs gegenüber.

Gemäß einer weiteren Weiterbildung ist die Wandstärke in den Seitenwandbereichen konstant.

Gemäß einer weiteren Weiterbildung ist der wellenförmige Querschnitt der Seitenwandbereiche durch Materialumformung des thermisch leitfähigen Materials, insbesondere mittels eines Tiefziehverfahrens, gebildet worden.

Vorzugsweise alle vier Seitenwände sowie gegebenenfalls ergänzend die Stirnwände sind dabei aus einem oder mehreren Metallblechen gefertigt, welche ganz oder in Abschnitten tiefgezogen sind. Als Metallbleche eignen sich dabei beispielsweise Bleche aus einem Aluminium- oder Edelstahlmaterial.

Gemäß einer weiteren Weiterbildung sind die zumindest zwei Seitenwände jeweils randseitig plan und weisen in ihrem Innenbereich jeweils zumindest einen Seitenwandbereich auf, wobei die Seitenwandbereiche jeweils von einem planen umlaufenden Randbereich der Seitenwand umschlossen sind.

Die Seitenwände sind vorzugsweise jeweils winklig zu einem oder mehreren benachbarten Seitenwänden und Stirnwänden angeordnet.

Benachbarte Seitenwände können durch ein gemeinsamen Element, beispielsweise ein gemeinsames Blech, gebildet sein, das an ein oder mehr Biegekanten umgebogen ist. Die Biegekanten segmentieren in diesem Fall das gemeinsame Element in benachbarte Seitenwände des Gehäuses.

Alternativ können benachbarte Seitenwände auch durch separate Gehäuseteile, beispielsweise in Form von Einzelblechen, gebildet sein, die winklig aneinandergesetzt und miteinander verbunden, vorzugsweise verschweißt, verschraubt und/oder vernietet, worden sind.

Wird das Gehäuse durch separate Gehäuseteile gebildet, so werden diese vorzugsweise lückenlos bzw. fluiddicht miteinander verbunden, um ein hermetisch dichtes Gehäuse zu bilden.

Aneinander angrenzende Gehäuseteile können im Schnittstellenbereich bzw. im Bereich ihrer Berührungskanten plan, gefalzt, gebördelt oder mit einer Nut versehen sein.

Gemäß einer weiteren Weiterbildung weisen die Seitenwandbereiche jeweils Rippen und/oder Nuten bzw. Rinnen auf, welche sich parallel entlang einer vorgegebenen Fluidstromrichtung erstrecken.

Erfindungsgemäß ist zumindest die Innenseite der Seitenwandbereiche jeweils mit einem elektrisch isolierenden, jedoch thermisch leitfähigen Material verkleidet oder beschichtet, welches auf der Innenseite spaltfrei anliegt. Das elektrisch isolierende Material dient dabei vorzugsweise einer elektrischen Trennung der Speicherzellen vom Gehäuse.

Gemäß einer auf der voranstehenden Weiterbildung basierenden weiteren Weiterbildung ist das Material auf seiner von dem Seitenwandbereich abgewandten Seite mit einem elektrisch leitfähigen Material verkleidet oder beschichtet, welches auf dem elektrisch isolierenden, thermisch leitfähigen Material spaltfrei anliegt, wobei der Seitenwandbereich, das elektrisch isolierende, thermisch leitfähige Material und das elektrisch leitfähige Material eine Sandwichstruktur ausbilden.

Bei einer solchen Sandwichstruktur weist das elektrisch leitfähige Material bzw. die dadurch gebildete Innenverkleidung vorzugsweise keinen elektrischen Kontakt zur Seitenwand des Gehäuses äußeren Gehäusewand auf. Eine Innenverkleidung oder Sandwichstruktur kann in vorteilhafter Weise lokale Temperaturerhöhungen bzw. so genannte Hotspots vermeiden und so zu einer verbesserten Gesamtwärmeabfuhr führen.

Gemäß einer weiteren Weiterbildung ist zwischen zumindest einer der Speicherzellen und der Innenseite des Seitenwandbereichs, dem elektrisch isolierenden, thermisch leitfähigen Material oder dem elektrisch leitfähigem Material zumindest ein elektrisch isolierender Abstandshalter für eine mechanische Trennung der zumindest einen Speicherzelle von dem Gehäuse angeordnet.

Dabei kann ein solcher Abstandshalter alternativ zu einer Verkleidung der Innenseite eines Seitenwandbereichs mit einem elektrisch isolierenden, thermisch leitfähigen Material vorgesehen werden.

Vorteilhaft können mittels solcher Abstandshalter im Inneren des Gehäuses Fluidkanäle gebildet werden, welche einen Fluidstrom im Bereich der Innenseiten des Gehäuses ermöglichen.

Gemäß einer weiteren Weiterbildung ist in dem Gehäuse eine Umwälzeinrichtung angeordnet, welche einer Umwälzung eines Fluids im Inneren des Gehäuses dient. Hierdurch kann vorteilhaft eine homogene Verteilung der von den Speicherzellen ausgehenden Wärme innerhalb des geschlossenen Gehäuses erzielt werden. Eine solche Umwälzeinrichtung kann beispielsweise als ein Lüfter ausgestaltet sein, wenn als Fluid Luft in dem Gehäuse umgewälzt wird.

Gemäß einer weiteren Weiterbildung weist ergänzend zumindest eine der Stirnwände des Gehäuses einen Stirnwandbereich mit einem wellenförmigen Querschnitt sowohl der Außenseite als auch der Innenseite der Stirnwand auf, wobei der jeweilige Stirnwandbereich insbesondere entsprechend einem Seitenwandbereich gemäß einem oder mehreren der vorstehend beschriebenen Ausgestaltungen der Seitenwandbereiche ausgestaltet ist.

Ein erfindungsgemäßes Fahrzeug, insbesondere ein Schienenfahrzeug, weist zumindest ein erfindungsgemäßes Energiespeichermodul auf.

Gemäß einer Weiterbildung des Fahrzeugs weist das Fahrzeug ferner eine Umwälzeinrichtung, insbesondere einen Lüfter, auf, welche derart ausgerichtet ist, dass ein von ihr erzeugter Fluidstrom entlang einer Längsrichtung von Rippen und/oder Nuten der Seitenwandbereiche ausgerichtet ist.

Gemäß einer weiteren Weiterbildung des Fahrzeugs sind die Rippen und/oder Nuten parallel zu einer Längsrichtung des Fahrzeugs ausgerichtet.

Zumindest eine der Seitenwände bzw. der Seitenwandbereiche kann einen Abschnitt der Außenhaut des Fahrzeugs bilden.

Die Erfindung wird nachfolgend anhand von Ausführungsbeispielen näher erläutert. Dabei zeigen beispielhaft
- Fig. 1: ein Ausführungsbeispiel für ein erfindungsgemäßes Energiespeichermodul mit Rippen,
- Fig. 2: ein Ausführungsbeispiel für ein erfindungsgemäßes Energiespeichermodul mit Rippen und Umwälzeinrichtung,
- Fig. 3: ein Ausführungsbeispiel für ein erfindungsgemäßes Energiespeichermodul mit Nuten,
- Fig. 4: ein Ausführungsbeispiel für ein erfindungsgemäßes Energiespeichermodul mit Nuten und Umwälzeinrichtung,
- Fig. 5: ein Ausführungsbeispiel für ein erfindungsgemäßes quaderförmiges Energiespeichermodul in einer perspektivischen Ansicht,
- Fig. 6: ein weiteres Ausführungsbeispiel für ein erfindungsgemäßes quaderförmiges Energiespeichermodul in einer perspektivischen Ansicht,
- Fig. 7-9: Ausführungsbeispiele für erfindungsgemäße Schienenfahrzeuge, die mit Ausführungsbeispielen für erfindungsgemäße Energiespeichermodule ausgestattet sind, und
- Fig. 10-14: Ausführungsbeispiele für Querschnitte von Seiten- bzw. Stirnwänden für erfindungsgemäße Energiespeichermodule.

In den Figuren werden der Übersicht halber für identische oder vergleichbare Elemente dieselben Bezugszeichen verwendet.

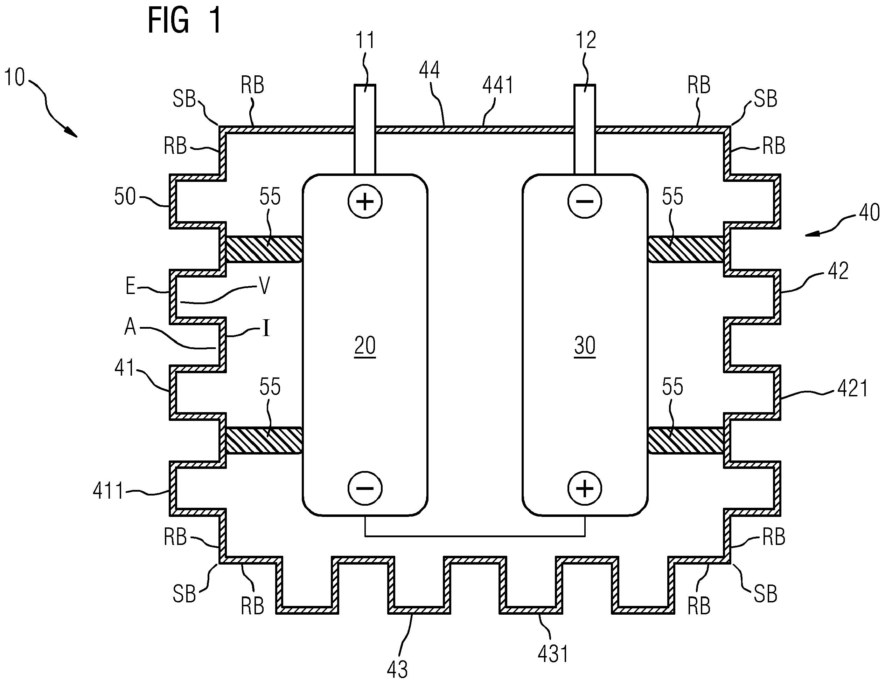

Die Figur 1 zeigt ein Ausführungsbeispiel für ein erfindungsgemäßes Energiespeichermodul 10, das mit zwei Speicherzellen 20 und 30 ausgestattet ist. Die beiden Speicherzellen 20 und 30 sind bei dem Ausführungsbeispiel gemäß Figur 1 elektrisch in Reihe geschaltet und stehen mit äußeren Anschlusskontakten bzw. Anschlusspolen 11 und 12 des Energiespeichermoduls 10 in Verbindung. Alternativ können die Speicherzellen 20 und 30 auch parallel geschaltet sein; auch können weitere Speicherzellen vorhanden sein, die in beliebiger Weise parallel oder in Reihe geschaltet sein können. Die Speicherzellen 20, 30 sind beispielsweise als Lithium-Ionen -Zellen ausgestaltet.

Die Speicherzellen 20 und 30 sind in einem gemeinsamen Gehäuse 40 untergebracht, dessen Gehäusewände 41, 42, 43 und 44 die beiden Speicherzellen 20 und 30 umgeben bzw. umschließen.

Alle oder einige Gehäusewände 41, 42, 43 des Gehäuses 40 weisen Gehäusewandbereiche 411, 421, 431 auf, die eine Wärmeabfuhr an die Umgebung des Gehäuses 40 des Energiespeichermoduls 10 bzw. eine Kühlung der Speicherzellen 20, 30 ermöglichen.

In dem schematischen Querschnitt gemäß Figur 1 ist eine linke Seitenwand 41, eine rechte Seitenwand 42 sowie eine untere Stirnwand 43 und eine obere Stirnwand 44 beispielhaft dargestellt. Die Wandbereiche 411 bis 413 sind in ihrem jeweiligen äußeren Bereich bzw. in ihrem jeweiligen Randbereich RB plan, jedoch in jeweiligen inneren Bereich zum Zwecke der Oberflächenvergrößerung wellenförmig. Aneinandergrenzende Wandbereiche können im Schnittstellenbereich SB wie gezeigt plan sein, alternativ können sie gefalzt, gebördelt oder mit einer Nut versehen sein.

Bei den wellenförmigen Seitenwandbereichen 411, 421 bzw. Stirnwandbereich 431 ist jeweils die außenseitige Formgestaltung komplementär zu der innenseitigen Formgestaltung ausgestaltet. So lässt sich in der Figur 1 erkennen, dass jeder Erhöhung E auf der Außenseite A - bezogen auf den jeweiligen Randbereich RB - jeder der Seitenwand bzw. Stirnwandbereiche jeweils eine korrespondierende Vertiefung V auf der Innenseite I gegenüberliegt. Die jeweilige Wandstärke bleibt dabei, von herstellungsbedingten Schwankungen abgesehen, vorzugsweise konstant.

Beispielsweise für eine mechanische Befestigung und einer elektrischen Isolation der Speicherzellen 20 und 30 am bzw. vom Gehäuse 40 sind Abstandshalter 55 vorgesehen, die vorzugsweise aus elektrisch nicht leitendem, jedoch thermisch leitendem Material bestehen. Die Abstandshalter 55 können auch weggelassen werden, wenn beispielsweise die Speicherzellen 20 und 30 direkt an einer Gehäusewand anliegen oder von dieser gehalten werden sollen.

Bei dem Ausführungsbeispiel gemäß Figur 1 sind die Seitenwand- und Stirnwandbereiche 411, 421 und 431 derart geformt, dass sie, ausgehend von ihrem jeweiligen Randbereich RB betrachtet, nach außen ragende Rippen 50 ausbilden, deren Längsrichtung sich bei der Darstellung gemäß Figur 1 senkrecht zur Bildebene parallel erstreckt und eine bevorzugte Richtung für einen Fluidstrom bildet. Die Rippen 50 sind vorzugsweise durch Materialumformung, vorzugsweise durch ein Tiefziehen, des jeweiligen Wandbereichs 411, 421 bzw. 431 gebildet worden. Vorteilhaft ist es, wenn die Wandbereiche 411, 421 und 431 durch tiefgezogene Bleche gebildet sind.

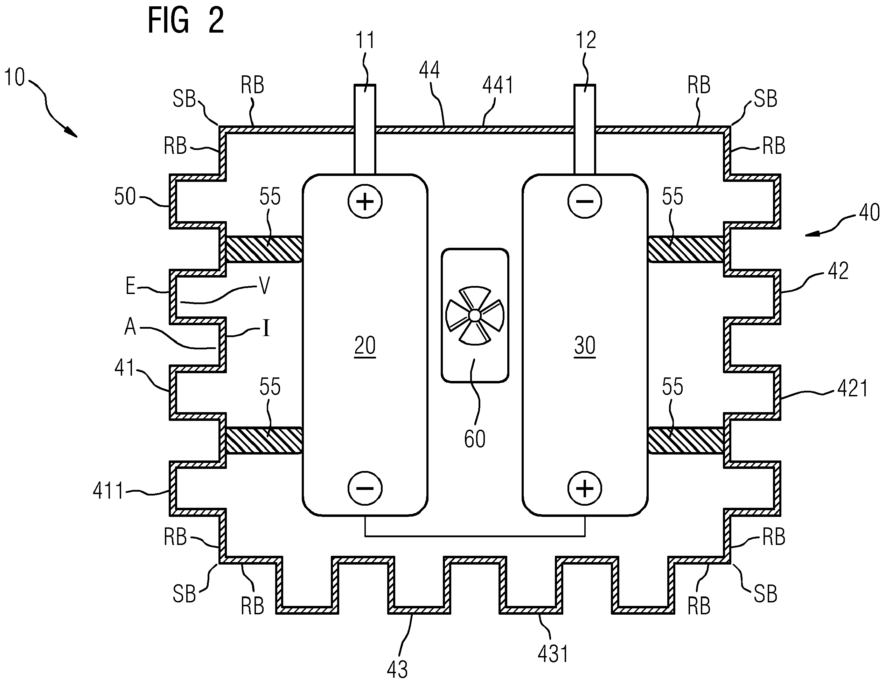

In der Ausführungsvariante gemäß Figur 2 ist das Energiespeichermodul 10 zusätzlich mit einer Umwälzeinrichtung 60, beispielsweise mit einem Lüfter, ausgestattet, die innerhalb des Gehäuses 40 angeordnet ist und ein im Inneren des Gehäuses 40 befindliches Fluid, beispielsweise Luft, ein sonstiges Gas oder eine Isolationsflüssigkeit, umwälzt, um eine Kühlung bzw. Entwärmung der Speicherzellen 20 und 30 zu bewirken.

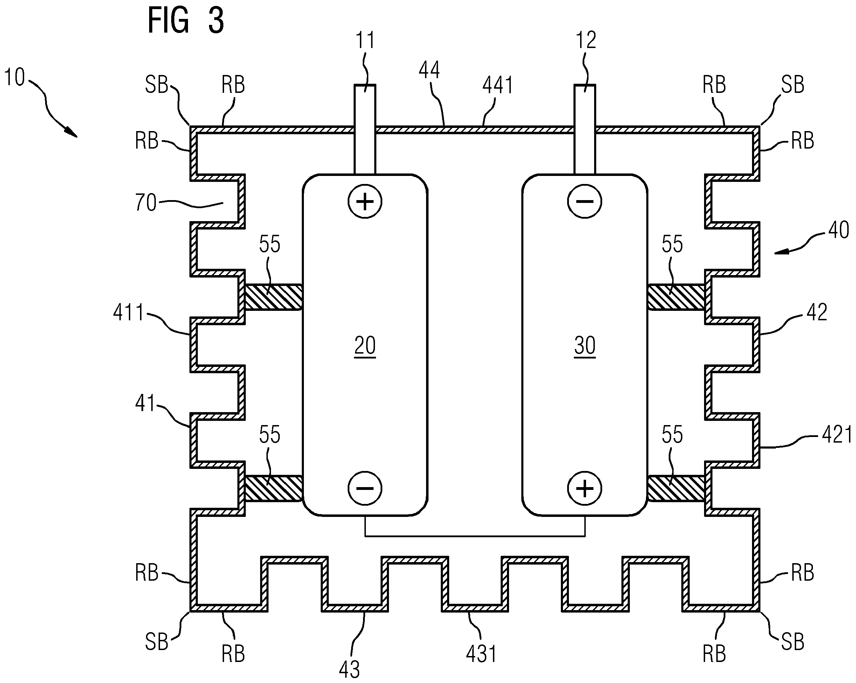

Die Figur 3 zeigt ein zu dem Ausführungsbeispiel der Figur 1 alternatives Ausführungsbeispiel für ein Energiespeichermodul 10, bei dem die beiden Seitenwände 41, 42 sowie die eine Stirnwand 43 mit, vom Randbereich RB -der jeweiligen Wand betrachtet, mit Nuten 70 versehen sind. Die Längsrichtung der Nuten 70 erstreckt sich wiederum senkrecht zur Bildebene der Figur 3 und bildet eine bevorzugte Fluidstromrichtung. Auch hier ist es vorteilhaft, wenn die Wandbereiche 411, 421 und 431 durch tiefgezogene Bleche gebildet sind.

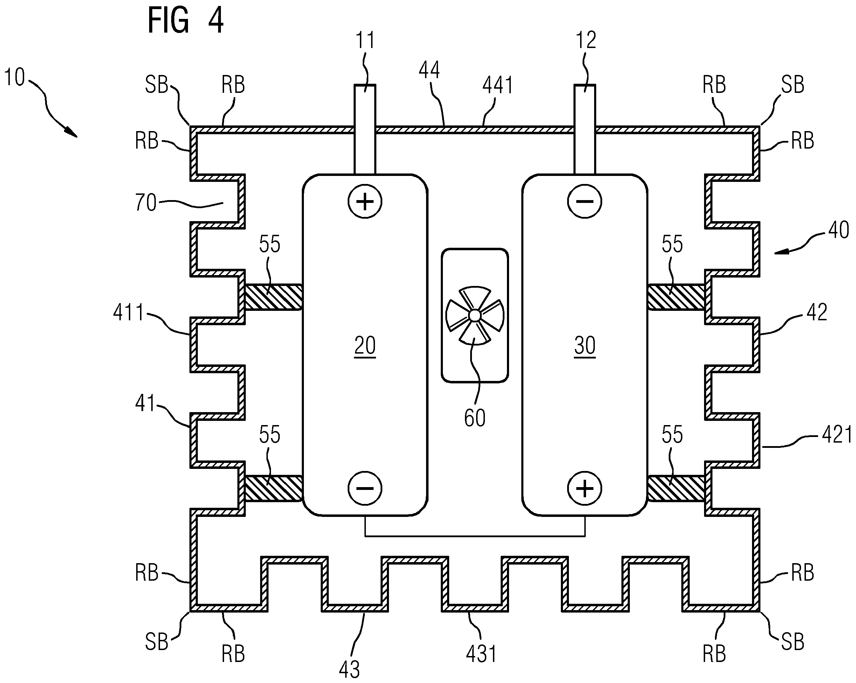

Die Figur 4 zeigt eine Ausführungsvariante des Ausführungsbeispiels gemäß Figur 3, bei welcher innerhalb des Gehäuses 40 des Energiespeichermoduls 10 zusätzlich eine Umwälzeinrichtung 60 angeordnet ist, die im Betrieb des Energiespeichermoduls 10 und insbesondere während eines Lade- oder Entladevorgangs der Speicherzellen 20, 30 ein im Inneren des Gehäuses 40 befindliches Fluid zwecks Kühlung bzw. Entwärmung der Speicherzellen 20 und 30 umwälzt.

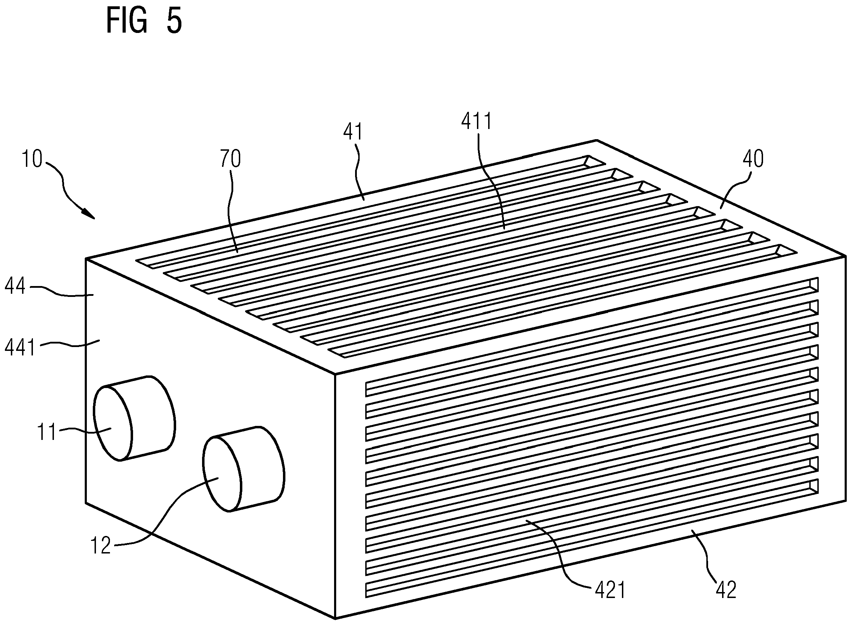

Die Figur 5 zeigt ein weiteres Ausführungsbeispiel eines erfindungsgemäßen Energiespeichermoduls 10, in einer perspektivischen Ansicht. Aus dieser Darstellung wird deutlich, dass die Seitenwandbereiche 411 und 421 des quaderförmigen Gehäuses 40 mit Nuten 70 versehen sind, die eine Wärmeabfuhr von Wärme aus dem Inneren des Gehäuses 40 nach außen ermöglichen bzw. vereinfachen. Diesbezüglich gelten die obigen Erläuterungen im Zusammenhang mit den Figuren 1 bis 4 bei dem Ausführungsbeispiel gemäß Figur 5 entsprechend. Ergänzend können auch die in der Ansicht nicht sichtbaren beiden weiteren Seitenwände entsprechende Seitenwandbereiche mit Nuten für eine Vergrößerung der Gehäuseoberfläche aufweisen.

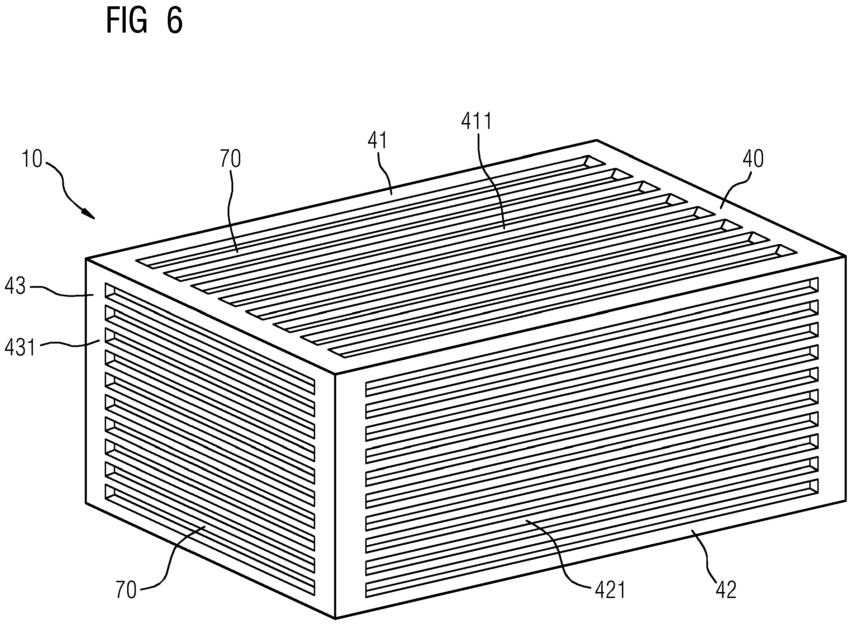

Die Figur 6 zeigt ein weiteres Ausführungsbeispiel eines erfindungsgemäßen Energiespeichermoduls 10, in einer perspektivischen Ansicht. Aus dieser Darstellung wird deutlich, dass zusätzlich zu den beiden Seitenwandbereichen 411 und 421 ein Stirnwandbereich 431 der Stirnwand 44, welche der die Anschlusskontakte 11, 12 tragenden Stirnwand 43 gegenüber liegt, ebenfalls mit Nuten 70 versehen ist.

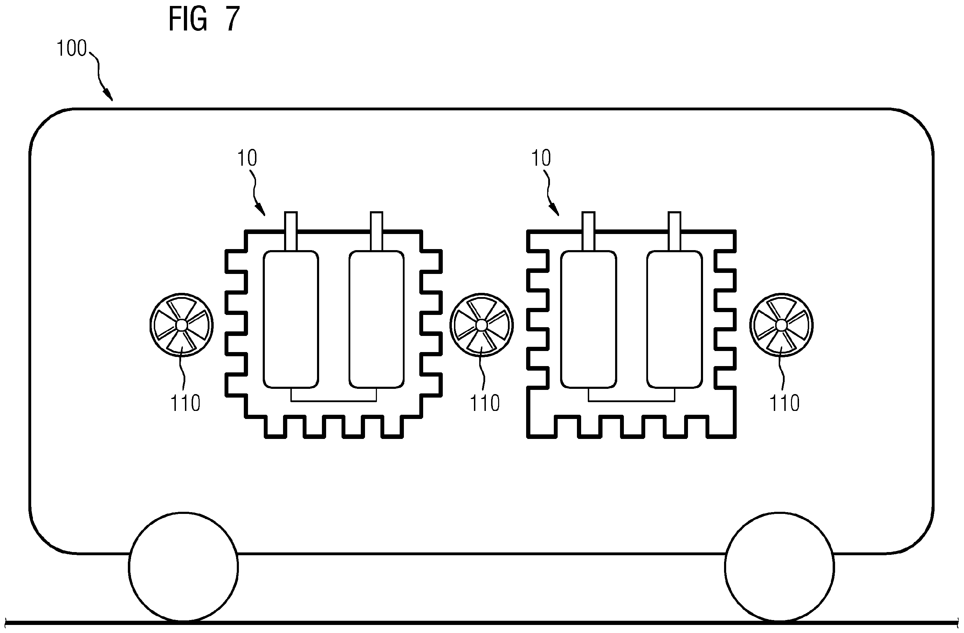

Die Figur 7 zeigt ein Schienenfahrzeug 100, das mit zwei Energiespeichermodulen 10 ausgestattet ist. Bei dem in der Figur 7 linken Energiespeichermodul 10 handelt es sich beispielhaft um ein Energiespeichermodul, wie es im Zusammenhang mit der Figur 1 erläutert worden ist, während es sich bei dem rechten Energiespeichermodul 10 um ein Energiespeichermodul, wie es im Zusammenhang mit der Figur 3 erläutert worden ist, handelt.

Vorteilhaft ist es, wenn das Schienenfahrzeug 10 zusätzlich mit einem oder mehreren Lüftern 110 ausgestattet ist, die zum Kühlen der Energiespeichermodule 10 einen gehäusenahen Fluidstrom bzw. Luftstrom im Inneren des Schienenfahrzeugs 100 hervorrufen.

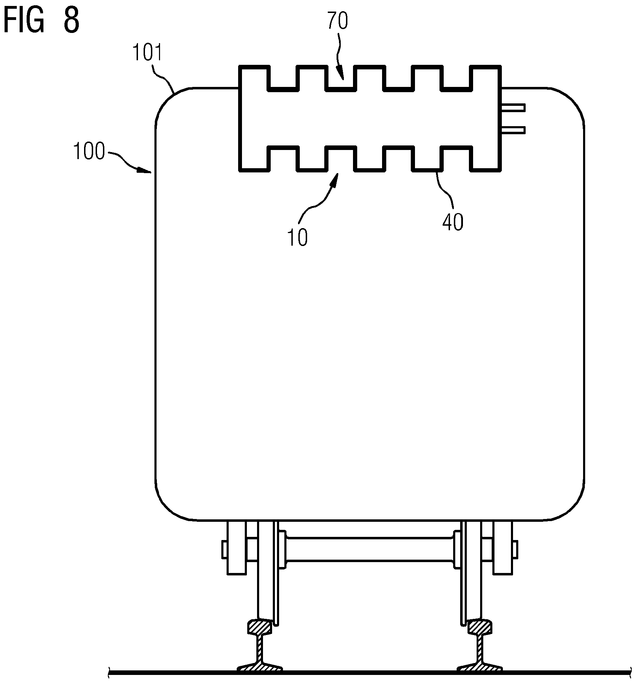

Die Figur 8 zeigt ein Ausführungsbeispiel für ein Schienenfahrzeug 100, bei dem ein Energiespeichermodul 10, bei dem es sich beispielsweise um eines der in den Figuren 1 bis 6 dargestellten Energiespeichermodule handeln kann, im Bereich des Dachs oder einer Seiten- oder Bodenwand des Schienenfahrzeugs 100 derart angeordnet ist, dass Rippen 50 bzw. Nuten 70 in Gehäusewandbereichen Gehäuses 40 von der Außenluft, insbesondere dem Fahrtwind bei Fahrt des Schienenfahrzeugs 100, gekühlt werden. Die Seitenwände bzw. die Rippen 50 bzw. Nuten 70 der Seitenwandbereiche bilden somit Abschnitte einer Außenhaut 101 des Schienenfahrzeugs 100.

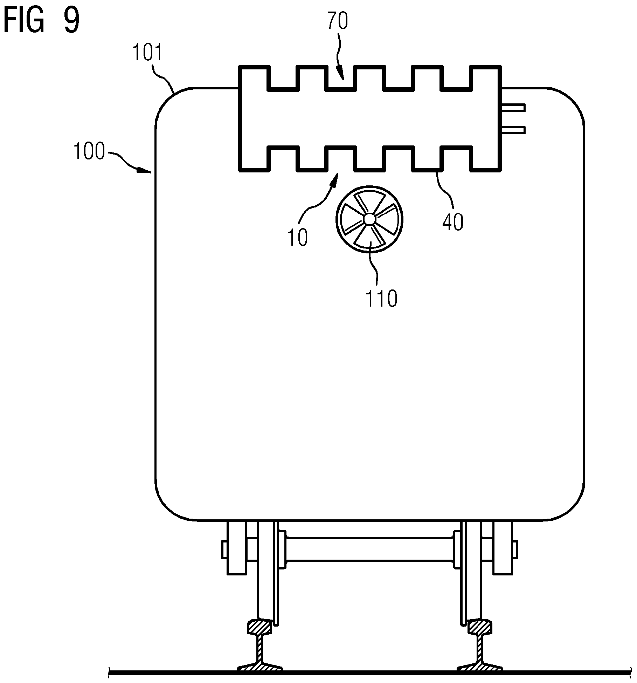

Die Figur 9 zeigt eine weitere Variante des Ausführungsbeispiels gemäß Figur 8. Bei dieser Ausführungsvariante ist im Inneren des Schienenfahrzeugs 100 zusätzlich ein Lüfter 110 vorgesehen, welcher die im Inneren des Schienenfahrzeugs befindlichen Seitenwand- bzw. Stirnwandbereiche des Gehäuses 40 kühlt.

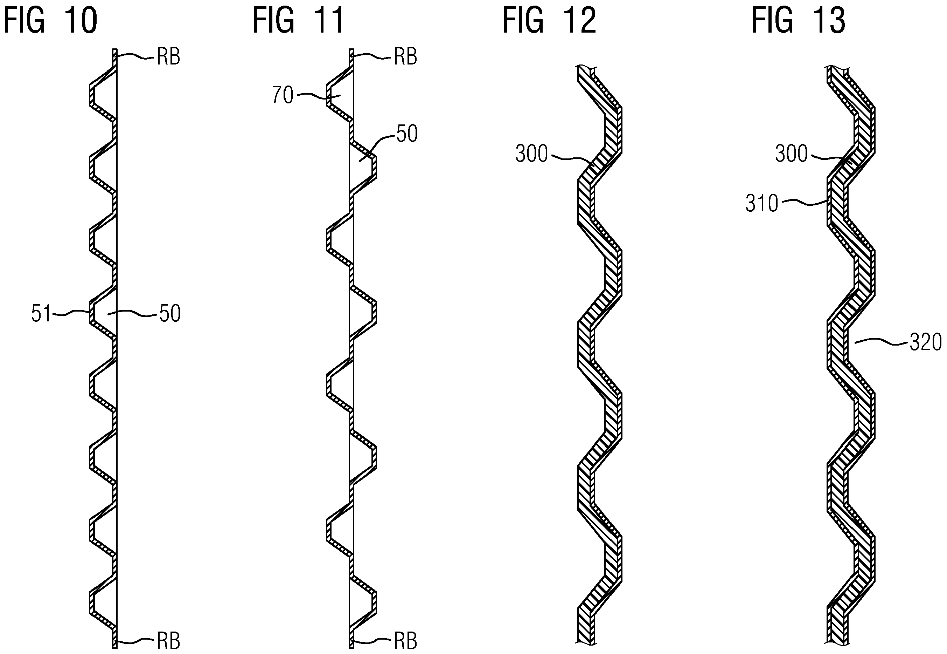

Die Figur 10 zeigt eine mögliche alternative Ausgestaltung für eine Seitenwand bzw. Stirnwand eines Gehäuses, deren Querschnitt bzw. Profil, betrachtet von der Ebene des Randbereichs RB, nach außen verlaufende trapezförmige Rippen 50 mit außenliegenden planen Dachbereichen 51 aufweisen.

Die Figur 11 zeigt eine weitere mögliche alternative Ausgestaltung für eine Seitenwand bzw. Stirnwand, bei der sowohl nach außen herausstehende Rippen 50 als auch nach innen ragende Nuten 70 einer Vergrößerung der Oberfläche des Gehäuses vorgesehen sind.

Die Figur 12 zeigt eine Ausgestaltung für eine erfindungsgemäße Seitenwand bzw. Stirnwand, die auf ihrer Innenseite mit einem elektrisch isolierenden, thermisch leitfähigen Material 300 verkleidet oder beschichtet ist. Das Isolationsmaterial 300 liegt dabei auf der Innenseite der Gehäusewand 41 spaltfrei an.

Die Figur 13 zeigt eine alternative Ausgestaltung für eine erfindungsgemäße Seitenwand bzw. Stirnwand, bei welcher die Innenseite ebenfalls mit einem elektrisch isolierenden Material 300 verkleidet ist. Das Material 300 ist seinerseits auf seiner von dem Wandbereich abgewandten Seite mit einem elektrisch leitfähigen Material 310 verkleidet oder beschichtet. Das elektrisch leitfähige Material 310, das elektrisch isolierende, thermisch leitfähige Material 300 und der Wandbereich bilden zusammen einen Querschnitt entsprechend einer Sandwichstruktur 320.

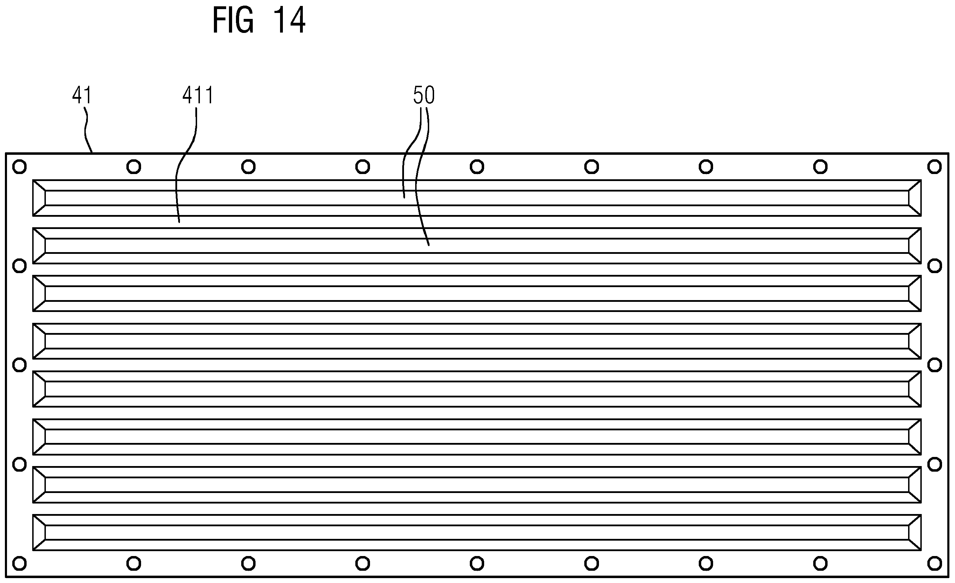

Die Figur 14 zeigt eine Draufsicht der in der Figur 5 dargestellten Seitenwand 41 des Gehäuses 40 bzw. des Seitenwandbereichs 411 dieser Seitenwand 41. Der Seitenwandbereich 411 weist einen Querschnitt entsprechend der beispielhaften Ausgestaltung der Figur 10 auf, wodurch trapezförmige Rippen 50 ausgebildet werden.

## Patentansprüche

1. Energiespeichermodul (10),
zumindest aufweisend:
ein quaderförmiges geschlossenes Gehäuse (40) mit vier Seitenwänden (41, 42) und zwei Stirnwänden (43, 44), in welchem zumindest zwei Speicherzellen (20, 30) angeordnet sind,
**dadurch gekennzeichnet, dass**
zumindest zwei der Seitenwände (41, 42) des Gehäuses (40) aus einem thermisch leitfähigen Material hergestellt sind und jeweils zumindest einen Seitenwandbereich (411, 421) mit einem wellenförmigen Querschnitt sowohl der Außenseite (A) als auch der Innenseite (I) der Seitenwand (41, 42) aufweisen, wobei die zumindest zwei Seitenwände (41, 42) aus einem oder mehreren Metallblechen gefertigt sind, wobei die Innenseiten (I) zumindest der Seitenwandbereiche (411, 421) jeweils mit einem elektrisch isolierenden, jedoch thermisch leitfähigen Material (300) verkleidet oder beschichtet sind, welches auf der Innenseite (I) spaltfrei anliegt, wobei das Material (300) auf seiner dem Seitenwandbereich (411, 421) abgewandten Seite mit einem elektrisch leitfähigen Material (310) verkleidet oder beschichtet ist, welches auf dem elektrisch isolierenden, thermisch leitfähigen Material (300) spaltfrei anliegt, wobei der Seitenwandbereich (411, 421), das elektrisch isolierende, thermisch leitfähige Material (300) und das elektrisch leitfähige Material (310) eine Sandwichstruktur (320) ausbilden.

2. Energiespeichermodul (10) nach Anspruch 1,
**dadurch gekennzeichnet, dass**
jeder Erhöhung (E) auf der Außenseite (A) des Seitenwandbereichs (411, 421) eine korrespondierende Vertiefung (V) auf der Innenseite (I) des Seitenwandbereichs (411, 421) gegenüberliegt, und
jeder Vertiefung (V) auf der Außenseite (A) des Seitenwandbereichs (411, 421) eine korrespondierende Erhöhung (E) auf der Innenseite (I) des Seitenwandbereichs (411, 421) gegenüberliegt.

3. Energiespeichermodul (10) nach Anspruch 1 oder 2,
**dadurch gekennzeichnet, dass**
die Wandstärke in den Seitenwandbereichen (411, 421) jeweils konstant ist.

4. Energiespeichermodul (10) nach einem der voranstehenden Ansprüche,
**dadurch gekennzeichnet, dass**
der wellenförmige Querschnitt der Seitenwandbereiche (411, 421) durch Materialumformung des thermisch leitfähigen Materials, insbesondere mittels eines Tiefziehverfahrens, gebildet worden ist.

5. Energiespeichermodul (10) nach einem der voranstehenden Ansprüche,
**dadurch gekennzeichnet, dass**
die zumindest zwei Seitenwände (41, 42) jeweils randseitig plan sind und in ihrem Innenbereich jeweils zumindest einen Seitenwandbereich (411, 421) aufweisen, wobei die Seitenwandbereiche (411, 421) jeweils von einem planen umlaufenden Randbereich (RB) der Seitenwand (41, 42) umschlossen sind.

6. Energiespeichermodul (10) nach einem der voranstehenden Ansprüche,
**dadurch gekennzeichnet, dass**
die Seitenwandbereiche (411, 421) jeweils Rippen (50) und/oder Nuten (70) aufweisen, welche sich parallel entlang einer vorgegebenen Fluidstromrichtung erstrecken.

7. Energiespeichermodul (10) nach Anspruch 1, **dadurch gekennzeichnet, dass**
das Material (300) auf seiner dem Seitenwandbereich (411, 421) abgewandten Seite mit einem elektrisch leitfähigen Material (310) verkleidet oder beschichtet ist, welches auf dem elektrisch isolierenden, thermisch leitfähigen Material (300) spaltfrei anliegt, wobei der Seitenwandbereich (411, 421), das elektrisch isolierende, thermisch leitfähige Material (300) und das elektrisch leitfähige Material (310) eine Sandwichstruktur (320) ausbilden.

8. Energiespeichermodul (10) nach Anspruch 1 oder 7
**dadurch gekennzeichnet, dass**
zwischen zumindest einer der Speicherzellen (20, 30) und der Innenseite (I) des Seitenwandbereichs (411, 421), dem elektrisch isolierenden, thermisch leitfähigen Material (300) oder dem elektrisch leitfähigem Material (310) zumindest ein elektrisch isolierender Abstandshalter (55) für eine mechanische Trennung der zumindest einen Speicherzelle (20, 30) von dem Gehäuse (40) angeordnet ist.

9. Energiespeichermodul (10) nach einem der voranstehenden Ansprüche,
**dadurch gekennzeichnet, dass**
in dem Gehäuse (40) eine Umwälzeinrichtung (60) angeordnet ist, welche einer Umwälzung eines Fluids im Inneren des Gehäuses (40) dient.

10. Energiespeichermodul (10) nach einem der voranstehenden Ansprüche,
**dadurch gekennzeichnet, dass**
zumindest eine der Stirnwände (43, 43) einen Stirnwandbereich (431, 441) mit einem wellenförmigen Querschnitt sowohl der Außenseite (A) als auch der Innenseite (I) der Stirnwand (43, 44) aufweist, wobei der jeweilige Stirnwandbereich (431, 441) insbesondere entsprechend einem Seitenwandbereich (411, 421) gemäß den Ansprüchen 2 bis 10 ausgestaltet ist .

11. Fahrzeug, insbesondere Schienenfahrzeug (100),
**dadurch gekennzeichnet, dass**
es zumindest ein Energiespeichermodul (10) nach einem der voranstehenden Ansprüche aufweist.

12. Fahrzeug nach Anspruch 11,
**dadurch gekennzeichnet, dass**
das Fahrzeug zumindest eine Umwälzeinrichtung (110), insbesondere zumindest einen Lüfter, aufweist, welche derart ausgerichtet ist, dass ein von ihr erzeugter Fluidstrom entlang einer Längsrichtung von Rippen (50) und/oder Nuten (70) der Seitenwandbereiche (411, 421) ausgerichtet ist.

13. Fahrzeug nach Anspruch 11 oder 12,
**dadurch gekennzeichnet, dass**
in den Seitenwandbereichen (411, 421) ausgebildete Rippen (50) und/oder Nuten (70) parallel zu einer Längsrichtung des Fahrzeugs ausgerichtet sind.

## Claims

1. Energy storage module (10),
at least having:
a cuboid closed housing (40) with four side walls (41, 42) and two front walls (43, 44), in which at least two storage cells (20, 30) are arranged,
**characterised in that**
at least two of the side walls (41, 42) of the housing (40) are manufactured from a thermally conductive material and in each case have at least one side wall region (411, 421) with a wavelike cross-section both of the exterior (A) and also the interior (I) of the side wall (41, 42), wherein the at least two side walls (41, 42) are produced from one or more metal sheets, wherein the interiors (I) of at least the side wall regions (411, 421) are clad or coated in each case with an electrically insulating, but thermally conductive material (300), which rests on the interior (I) in a gap-free manner, wherein the material (300), on its side facing away from the side wall region (411, 421), is clad or coated with an electrically conductive material (310), which rests on the electrically insulating, thermally conductive material (300) in a gap-free manner, wherein the side wall region (411, 421), the electrically insulating, thermally conductive material (300) and the electrically conductive material (310) form a sandwich structure (320).

2. Energy storage module (10) according to claim 1,
**characterised in that**
each elevation (E) on the exterior (A) of the side wall region (411, 421) faces a corresponding depression (V) on the interior (I) of the side wall region (411, 421), and
each depression (V) on the exterior (A) of the side wall region (411, 421) faces a corresponding elevation (E) on the interior (I) of the side wall region (411, 421).

3. Energy storage module (10) according to claim 1 or 2,
**characterised in that**
the wall thickness in the side wall regions (411, 421) is constant in each case.

4. Energy storage module (10) according to one of the preceding claims,
**characterised in that**
the wavelike cross-section of the side wall regions (411, 421) has been formed by material deformation of the thermally conductive material, in particular by means of a deep-drawing method.

5. Energy storage module (10) according to one of the preceding claims,
**characterised in that**
the at least two side walls (41, 42) are flat at the edges in each case and have at least one side wall region (411, 421) in their inner region in each case, wherein the side wall regions (411, 421) are enclosed in each case by a flat, peripheral edge region (RB) of the side wall (41, 42).

6. Energy storage module (10) according to one of the preceding claims,
**characterised in that**
the side wall regions (411, 421) have ribs (50) and/or grooves (70) in each case, which extend in parallel along a predetermined fluid flow direction.

7. Energy storage module (10) according to claim 1,
**characterised in that**
the material (300) is clad or coated on its side, with an electrically conductive material (310), facing away from the side wall region (411, 421), said material resting on the electrically insulating, thermally conductive material (300) in a gap-free manner, wherein the side wall region (411, 421), the electrically insulating, thermally conductive material (300) and the electrically conductive material (310) form a sandwich structure (320).

8. Energy storage module (10) according to claim 1 or 7,
**characterised in that**
at least one electrically insulating spacer (55) for a mechanical separation of the at least one storage cell (20, 30) from the housing (40) is arranged between at least one of the storage cells (20, 30) and the interior (I) of the side wall region (411, 421), the electrically insulating, thermally conductive material (300 or the electrically conductive material (310).

9. Energy storage module (10) according to one of the preceding claims,
**characterised in that**
a circulation facility (60), which serves to circulate a fluid in the interior of the housing (40), is arranged in the housing (40).

10. Energy storage module (10) according to one of the preceding claims,
**characterised in that**
at least one of the front walls (43, 43) has a front wall region (431, 441) with a wavelike cross-section both of the exterior (A) and also the interior (I) of the front wall (43, 44), wherein the respective front wall region (431, 441) is embodied in particular in accordance with a side wall region (411, 421) according to claim 2 to 10.

11. Vehicle, in particular rail vehicle (100),
**characterised in that**
it has at least one energy storage module (10) according to one of the preceding claims,

12. Vehicle according to claim 11,
**characterised in that**
the vehicle has at least one circulation facility (110), in particular at least one fan, which is designed so that a fluid flow generated thereby is aligned along a longitudinal direction of ribs (50) and/or grooves (70) of the side wall regions (411, 421).

13. Vehicle according to claim 11 or 12,
**characterised in that**
ribs (50) embodied in the side wall regions (411, 421) and/or grooves (70) are aligned in parallel to a longitudinal direction of the vehicle.

## Revendications

1. Module (10) accumulateur d'énergie,
comportant au moins :
une boîte (40) parallélépipédique fermée ayant quatre parois (41, 42) latérales et deux parois (43, 44) frontales, dans laquelle sont disposées au moins deux éléments (20, 30) d'accumulateur,
**caractérisé en ce que**
des parois (41, 42) latérales de la boîte (40) sont en un matériau conducteur de la chaleur et ont chacune au moins une partie (411, 421) de paroi latérale de section transversale ondulée, tant de la face (A) extérieure qu'également de la face (I) intérieure de la paroi (41, 42) latérale, dans lequel les au moins deux parois (41, 42) latérales sont fabriquées en une ou en plusieurs tôles métalliques, dans lequel les faces (I) intérieures d'au moins les parties (411, 421) de paroi latérale sont habillées ou revêtues chacune d'un matériau (300) conducteur de la chaleur isolant électriquement, qui s'applique sans fissure à la face (I) intérieure, dans lequel le matériau (300) est, sur sa face non tournée vers la partie (411, 421) de paroi latérale, habillé ou revêtu d'un matériau (310) conducteur de l'électricité, qui s'applique sans fissure au matériau (300) conducteur de la chaleur isolant électriquement, dans lequel la partie (411, 421) de paroi latérale, le matériau (300) conducteur de la chaleur isolant électriquement et le matériau (310) conducteur électriquement forment une structure (320) en sandwich.

2. Module (10) accumulateur d'énergie suivant la revendication 1,
**caractérisé en ce que**
chaque éminence (E) sur la face (A) extérieure de la partie (411, 421) de paroi latérale est opposée à une cavité (V) correspondante sur la face (I) intérieure de la partie (411, 421) de paroi latérale, et
chaque cavité (V) sur la face (A) extérieure de la partie (411, 421) de paroi latérale est opposée à une éminence (E) correspondante sur la face (I) intérieure de la partie (411, 421) de paroi latérale.

3. Module (10) accumulateur d'énergie suivant la revendication 1 ou 2,
**caractérisé en ce que**
l'épaisseur de paroi dans les parties (411, 421) de paroi latérale est respectivement constante.

4. Module (10) accumulateur d'énergie suivant l'une des revendications précédentes,
**caractérisé en ce que**
la section transversale ondulée des parties (411, 421) de paroi latérale a été formée par déformation du matériau conducteur de la chaleur, en particulier au moyen d'un procédé d'emboutissage profond.

5. Module (10) accumulateur d'énergie suivant l'une des revendications précédentes,
**caractérisé en ce que**
les au moins deux parois (41, 42) latérales sont chacune planes du côté du bord et ont, dans leurs parties intérieures, chacune au moins une partie (411, 421) de paroi latérale, dans lequel les parties (411, 421) de paroi latérale sont entourées chacune d'une partie (RB) de bord plane, faisant le tour, de la paroi (41, 42) latérale.

6. Module (10) accumulateur d'énergie suivant l'une des revendications précédentes,
**caractérisé en ce que**
les parties (411, 421) de paroi latérale ont chacune des nervures (50) et/ou des rainures (70), qui s'étendent parallèlement suivant un sens d'écoulement de fluide donné à l'avance.

7. Module (10) accumulateur d'énergie suivant la revendication 1,
**caractérisé en ce que**
le matériau (300) est, sur sa face non tournée vers la partie (411, 421) de paroi latérale, habillé ou revêtu d'un matériau (310) conducteur de l'électricité, qui s'applique sans fissure au matériau (300) conducteur de la chaleur isolant électriquement, dans lequel la partie (411, 421) de paroi latérale, le matériau (300) conducteur de la chaleur isolant électriquement et le matériau (310) conducteur électriquement forment une structure (320) en sandwich.

8. Module (10) accumulateur d'énergie suivant la revendication 1 ou 7,
**caractérisé en ce qu'**
entre au moins l'un des éléments (20, 30) d'accumulateur et de la face (I) intérieure de la partie (411, 421) de paroi latérale, du matériau (300) conducteur de la chaleur isolant électriquement ou du matériau (310) conducteur électriquement est disposée au moins une entretoise (55) isolante électriquement pour séparer mécaniquement le au moins un élément (20, 30) d'accumulateur de la boîte (40).

9. Module (10) accumulateur d'énergie suivant l'une des revendications précédentes,
**caractérisé en ce que**
dans la boîte (40) est disposé un dispositif (60) de circulation, qui sert à faire circuler un fluide à l'intérieur de la boîte (40) .

10. Module (10) accumulateur d'énergie suivant l'une des revendications précédentes,
**caractérisé en ce qu'**
au moins l'une des parois (43, 43) frontales a une partie (431, 441) de paroi frontale de section transversale ondulée, tant de la face (A) extérieure qu'également de la face (I) intérieure de la paroi (43, 44) frontale, dans lequel la partie (431, 441) de paroi frontale respective est conformée, en particulier de manière à correspondre à une partie (411, 421) de paroi latérale suivant les revendications 2 à 10.

11. Véhicule, en particulier véhicule (100) ferroviaire,
**caractérisé en ce que**
il a au moins un module (10) accumulateur d'énergie suivant l'une des revendications précédentes.

12. Véhicule suivant la revendication 11,
**caractérisé en ce que**
le véhicule a au moins un dispositif (110) de circulation, en particulier au moins un ventilateur, qui est agencé de manière à ce qu'un courant de fluide par lui produit soit dirigé suivant une direction longitudinale de nervures (50) et/ou de rainures (70) des parties (411, 421) de paroi latérale.

13. Véhicule suivant la revendication 11 ou 12,
**caractérisé en ce que**
les nervures (50) et/ou les rainures (70) constituées dans les parties (411, 421) de paroi latérale sont dirigées parallèlement à une direction longitudinale du véhicule.
